# EUROPÄISCHE PATENTSCHRIFT

(11) **EP 0 659 836 B1**
(45) Veröffentlichungstag und Bekanntmachung des Hinweises auf die Patenterteilung: **24.03.1999**
(21) Anmeldenummer: 94120602.1
(22) Anmeldetag: 23.12.1994
(51) Int. Cl.: C08L 77/00, C08K 5/5357

(54) **Schwerentflammbare Polyamide**
Flame-resistant polyamide
Polyamide résistant à la flamme

(30) Priorität: 23.12.1993 CH 3841/93; 17.11.1994 DE 4441022
(43) Veröffentlichungstag der Anmeldung: 28.06.1995
(73) Patentinhaber: EMS-INVENTA AG, 8001 Zürich (CH)
(72) Erfinder: Hewel, Manfred, Dr. Rer. Nat., CH-7415 Rodels (CH); Dalla Torre, Hans, Dr. Phil., CH-7013 Domat/Ems (CH); Capaul, Daniel, Dipl. Chem. HTL, CH-7013 Domat/Ems (CH)
(74) Vertreter: Becker, Eberhard

(56) Entgegenhaltungen:
- WO-A-92/13717
- FR-A- 2 164 579

## Beschreibung

Die Erfindung betrifft schwerentflammbare Polyamide bzw. Polyamid-Blends, die bereits mit niedrigen Anteilmengen an einer Alkylphosphorsäureverbindung der weiter unten aufgeführten Formel I VO-Klassifikation erreichen. Aus diesen Polyamiden bzw. Polyamid-Blends können schwerentflammbare Formmassen bzw. Formkörper hergestellt werden.

Im Stand der Technik werden als Flammschutzmittel für die Herstellung flammfester Polykondensationsprodukte beispielsweise in US-PS 34 18 267, DE-AS 16 94 494, DE-AS 19 31 387 und DE-OS 25 44 219 Halogenverbindungen, meist in Kombination mit Antimontrioxid bzw. dessen Formulierungen, empfohlen.

Trotz der guten Wirksamkeit geeigneter Halogenverbindungen als Flammschutzmittel sind mit ihrer Verwendung erhebliche Nachteile verbunden. Sie werden ausführlich in der EP 00 44 419 und der DE-32 08 486 behandelt. Ein besonders schwerwiegender Nachteil besteht bei der Verwendung von perbromierten Aromaten wie z.B. Dekabromdiphenyloxid darin, daß sich im Falle des Abbrandes toxische Verbindungen wie Dioxine und Furane bilden, die zu schweren gesundheitlichen Schäden führen.

Neben Halogenverbindungen ist der Einsatz von elementarem Phosphor für die flammfeste Ausrüstung von Thermoplasten vor allem von Polyamid bekannt. Diese Arbeitsweise wird in der DE-AS 11 73 641 und US-PS 39 51 908 beschrieben. Auch hier müssen im Brandfall eine Reihe von Nachteilen, wie die Bildung von Phosphin, in Kauf genommen werden. Zusätzlich werden die Farbe sowie die elektrischen Eigenschaften negativ beeinflußt. Hierzu gibt die EP-B-00 44 419 Auskunft.

Magnesium- und Aluminium-Hydroxid sowie stickstoffhaltige Verbindungen, wie Melamin, Melamincyanurat und Cyanoguanidin sind als Flammschutzmittel in Polyamid nur bedingt geeignet. Sie müssen in hohen Mengen eingesetzt werden, um die Einstufung VO nach der UL-94 Spezifikation der Underwriter Laboratories zu erreichen. Dadurch werden die mechanischen Eigenschaften stark verändert. Solche Flammschutzmittel werden u.a. in der US-PS 42 63 203, der US-PS 40 01 177, der DE-OS 29 37 379, der DE-AS 16 94 254, der DE-PS 41 27 112 und der DE-OS 39 09 145 vorgeschlagen.

In der US-PS 37 89 091 und der US-PS 38 49 368 werden ringförmige Phosphorsäureester als flammhemmende Additive für verschiedene Homopolymere, darunter auch PA 6.6 beschrieben, ohne daß die Lehre dieser Patente zur Lösung der speziellen Problematik von Polyamid mit VO Qualifikation führt. Derartige Verbindungen zeigen in teilkristallinen Polyamiden den Nachteil einer deutlichen Migration.

US-A-3,849 368 beschreibt ringförmige Phosphorsäureester, auch solche vom Typ des Antiblaze 1045 als flammhemmende Additive für verschiedene Polymere wie PET, PACN, PU. Weiterhin werden auch rein teilkristalline Polyamide wie PA 66 und PA 61 beschrieben. Die erwähnten flammhemmenden Additive (Antiblaze 1045) zeigen jedoch in teilkristallinen Polyamiden den Effekt einer deutlichen Migration und Belagsbildung an der Oberfläche von aus diesen Polyamiden hergestellten Formkörpern sowie eine zunehmende Vergilbung.

In WO-A- 92/13717 werden flammwidrige Zweischichtfolien für Kabelanwendungen beschrieben, bei welchen eine Schicht aus PVC und die zweite Schicht aus einem Antiblaze 1045 Typ flammwidrig ausgerüsteten Polyamidschicht besteht. Als verwendbare Polyamide wird eine Reihe von teilkristallinen Polyamiden wie PA6, PA66, PA46, PA69, PA11 und PA12 sowie andere genannt. Gemäß WO-A- 92/13717 müssen mindestens 20 Gew.-% Phosphonatester zu den Formmassen hinzugegeben werden, um diese flammwidrig auszurüsten.

Ähnlich wie in WO-A-92/13717 werden in WO-A- 93/18914 auch flammwidrige Mehrschichtfolien beschrieben. Diese Folien bestehen einerseits aus einem flammwidrig ausgerüsteten Polyolefin und andererseits aus einem flammresistenten Polyamid. Die Folien werden zur Außenisolierung von Stromkabeln eingesetzt. Als Polyamide werden Nylon 6, Nylon 66, Nylon 610, Nylon 46, Nylon 69, Nylon 11, Nylon 12 und andere semikristalline Polyamide genannt. Der Anteil an Antiblaze 1045 beträgt in diesen Polyamidschichten bis zu 50 Gew.-%.

In EP-A- 0 070 001 werden amorphe Polyamide und Polyamid-Blends aus teilkristallinen und amorphen Polyamiden beschrieben. Von einer flammwidrigen Ausrüstung dieser Polyamide findet sich keine Anregung in EP-A- 0 070 001.

Der Erfindung liegt daher die Aufgabe zugrunde, schwerentflammbares Polyamid, insbesondere mit V0-Qualifikation sowie daraus herstellbare schwerentflammbare Formmassen bzw. Formkörper bereitzustellen. Diese Formmassen bzw. Formkörper sollen gute mechanische und thermische Eigenschaften aufweisen, wobei auch insbesondere die V0-Qualifikation gemäß UL-94 erfüllt werden soll. Die Formmassen bzw. Formkörper sollen weiterhin keine Migration aufweisen und im Vergleich zum normalen Polyamid unveränderte elektrische Eigenschaften haben.

Diese Aufgabe wird durch das schwerentflammbare Polyamid gemäß Anspruch 1 sowie durch die schwerentflammbaren Formmassen bzw. Förmkörper gemäß Anspruch 10 bzw. Anspruch 11 gelöst. Anspruch 12 betrifft spezielle Verwendungen des erfindungsgemäßen Polyamids.

In den Unteransprüchen sind vorteilhafte Ausführungsformen der Erfindung enthalten.

Diese Aufgabe wird insbesondere durch nicht migrierende Phosphonsäureverbindungen als flammhemmende Additive gelöst. Es ist daher ein besonderer Vorteil der erfindungsgemäßen Formmassen bzw. Formkörper, daß sie keine störende Belagsbildung aufweisen.

Ein weiterer Vorteil sind die durch die flammhemmenden Additive praktisch unveränderten mechanischen und elektrischen Eigenschaften der Polyamide respektive ihrer Formkörper.

Besonders vorteilhaft ist auch, daß die erfindungsgemäßen Formmassen bzw. Formkörper bereits mit Additiv-Anteilen von 4 bis 15 Gew.-%, bezogen auf den Polyamid-Anteil, so stark flammhemmend modifiziert sind, daß sie die V0-Einstufung erreichen. Die V0-Qualifikation bezieht sich auf Prüfstäbe mit einer Dicke von ≤ 0,8 mm.

Für einen Polyamid-Blend auf Basis von PA 6 oder PA 12 genügen bereits etwa 5 Gew.-% des flammhemmenden Additivs um den V0-Wert im Verbrennungstest UL-94 zu erreichen.

Die erfindungsgemäßen thermoplastischen Polyamide sowie die schwerentflammbaren Formmassen bzw. Formkörper sind Blends aus
a) 40 bis 98 Gew.-% eines teilkristallinen Polyamids
b) 2 bis 60 Gew.-% eines amorphen Polyamids oder Copolyamids.

Bevorzugte teilkristalline Polyamide sind die semikristallinen Homopolyamide PA 6, PA 11, PA 12, PA 66, PA 69, PA 610, PA 612, PA 1212, PA 46 aber auch solche aus Monomeren der Gruppe aliphatischer Diamine mit 4 bis 12 C-Atomen, cycloaliphatischer Diamine mit 7 bis 22 C-Atomen und aromatischer Diamine mit 6 bis 22 C-Atomen in Kombination mit Monomeren der Gruppe aliphatischer Dicarbonsäuren mit 4 bis 12 C-Atomen, cycloaliphatischer Dicarbonsäuren mit 8 bis 24 C-Atomen und aromatischer Dicarbonsäuren mit 8 bis 20 C-Atomen.

Als amorphe Polyamid-Typen eignen sich die Polyamide PA 12 MACMI (PA 12 Bis-(methyl-para-aminocyclohexyl)methan, Isophthalsäure), PA 12 MACMT (PA 12 Bis-(methyl-para-aminocyclohexyl)methan, Terephthalsäure), PA 12 MACMI MACMT, PA 61, PA 61 6T, PA 12 MACM36, PA NDT INDT (PA 2,2,4-Trimethylhexamethylendiamin, Terephthalsäure/2,4,4-Trimethylhexamethylendiamin, Terephthalsäure), PA NDI INDI (PA 2,2,4-Trimethylhexamethylendiamin, Isophthalsäure/2,4,4-Trimethylhexamethylendiamin, Isophthalsäure); PA 61/6T MACMI, aber auch solche aus den Monomeren Hexamethylendiamin und seinen Alkylderivaten, wie 1,6-Diamino-2,2,4.trimethylhexan, seinen halogenierten Derivaten, 1,6-Diamino-2,4,4-trimethylhexan und Bis-(p-aminocyclohexyl)methan und seinen Derivaten und Homologen, wie 3,3'-Dimethyl-4,4'-Diamino-dicyclohexylmethan, 4,4'-Diaminodicyclohexyl-2,2'-propan (PACP), 3-Aminomethyl-3,5,5-trimethylcyclohexylamin (Isophorondiamin), in Kombination mit aliphatischen oder aromatischen Dicarbonsäuren mit 4 bis 12 bzw. 8 bis 20 Kohlenstoffatomen analog ISO-Norm 1874-1.

Das flammhemmende Additiv gehört zur Gruppe der aliphatischen Polyolester einer alkylierten Phosphonsäure. Bevorzugtes Additiv ist nach Formel I der Trimethylolpropanolester der Methylphosphonsäure bzw. das Methylphosphonsäure -bis-[(5-ethyl-2-methyl-1,3,2-dioxaphosphorinan-5-yl)-methyl]ester-P,P'-dioxid der Summenformel C₁₅H₃₁O₉P₃, das unter dem Handelsnamen Antiblaze 1045 von der Firma Albright & Wilson, USA vertrieben wird (CAS: 42595-45-9), dessen Monomeres oder Gemische davon:

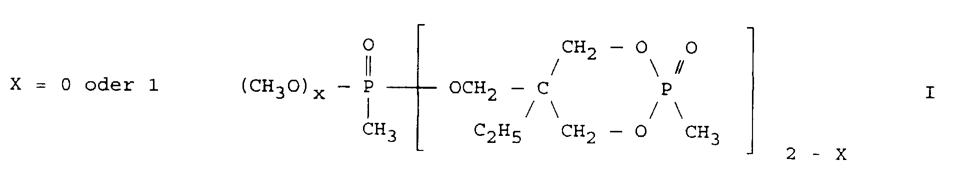

Das flammhemmende Additiv der vorgenannten allgemeinen Formel I liegt in einer Reinheitskonzentration von 60 bis 100% vor. Der Rest kann gegebenenfalls aus anderen phosphorhaltigen Verbindungen, insbesondere Phosphonsäuren, bestehen. Die erfindungsgemäßen thermoplastischen Formmassen bzw. Formkörper können übliche Zusatzstoffe und Verarbeitungshilfsmittel wie Stabilisatoren, Oxidationsverzögerer, Mittel gegen Wärmezersetzung und Zersetzung durch ultraviolettes Licht, Gleit- und Entformungsmittel, Pigmente, Weichmacher, Schlagzähmodifikatoren, faser- und pulverförmige Füll- und Verstärkungsstoffe sowie Leitfähigkeitszusätze, enthalten, deren Anteil in der Regel nicht mehr als 50 Gew.-%, bezogen auf das Gesamtgewicht der Formmassen beträgt.

Wie oben ausgeführt wurde, können die erfindungsgemäßen Formmassen bzw. Formkörper verarbeitungsbedingte oder verwendungsnotwendige Additive nach dem Stand der Technik enthalten. Unter den gleichen Voraussetzungen können die Formmassen bzw. die Formkörper, die aus einem Blend aus den erfindungsgemässen Additiven hergestellt werden können, weitere Polymere aus der Gruppe PET, PBT, PC, PVC, PVA, PU, PE, PP, PPS enthalten, wobei die Blends wiederum modifiziert sein können mit Additiven aus der Gruppe der Schlagzähmodifikatoren, Weichmacher, Stabilisatoren, Verstärkungsmittel, Pigmente, Farbstoffe und Füllstoffe.

Die Formmassen bzw. Formkörper enthalten die Alkylphosphonsäureverbindung in Anteilen von 4 bis 15 Gew.-%, bezogen auf den Polyamidanteil. Besonders bevorzugt sind Formmassen bzw. Formkörper, in denen die Alkylphosphonsäureverbindungen in Anteilen von 4 bis 10 Gew.-%, insbesondere 5 Gew.-%, bezogen auf den Polyamidanteil, enthalten ist.

Die erfindungsgemäßen Formkörper können durch die Verfahren des Standes der Technik wie Spritzgießen, Extrudieren, Coextrudieren, Blasformen oder Umformen hergestellt werden.

Die Erfindung betrifft auch die Verwendung von Alkylphosphonsäure-Estern aus einem aliphatischen Polyol und einer alkylierten Phosphonsäure als flammhemmendes Additiv zur Herstellung von Formkörpern aus Polyamiden. (Beispiele für Formkörper sind Fäden, Kabel, Stecker, Platten und dergleichen).

### Beispiele 1 bis 5 Herstellung der Polyamid-Blends

Eine Granulatmischung des Typs Grilamid L20 (Komponente A) und des transparenten Typs TR55 (Komponente B) wird in einem WPF-ZSK 30 Extruder aufgeschmolzen. Das Flammschutzmittel Antiblaze 1045 (Komponente B) wird dabei mit einer beheizbaren Dosieranlage in die Schmelze zudosiert.

Der aus dem Extruder abgezogene Strang wird in einem Wasserbad gekühlt und in einem konventionellen Granulator zerkleinert. Daraus wurde mittels einer Arburg 320/210/750 - Spritzgußmaschine DIN Prüfstäbe für die Messung der entsprechenden Eigenschaften hergestellt.

### Komponente A

Polyamid 12 mit einer relativen Viskosität (0,5 g/100 mℓ in m Kresol bei 23 °C) von 2,0 (Grilamid L20 der EMS-CHEMIE AG, Zürich) oder Polyamid 6 mit einer relativen Viskosität (1 % in H₂SO₄) von 4,0 (Grilon F40 der EMS-CHEMIE AG, Zürich).

### Komponente B

Transparentes CoPA 12/MACMI (Grilamid TR55 der EMS-CHEMIE AG, Zürich).

### Komponente C

Flammschutzmittel Antiblaze 1045 von der Firma Albright & Wilson.

Die erfindungsgemäßen Beispiele 1 bis 4 zeigen gegenüber den Vergleichsbeispielen kaum veränderte mechanische Eigenschaften, gleiche elektrische Eigenschaften, eine VO-Klassifizierung nach UL-94 und praktisch keine Migration.

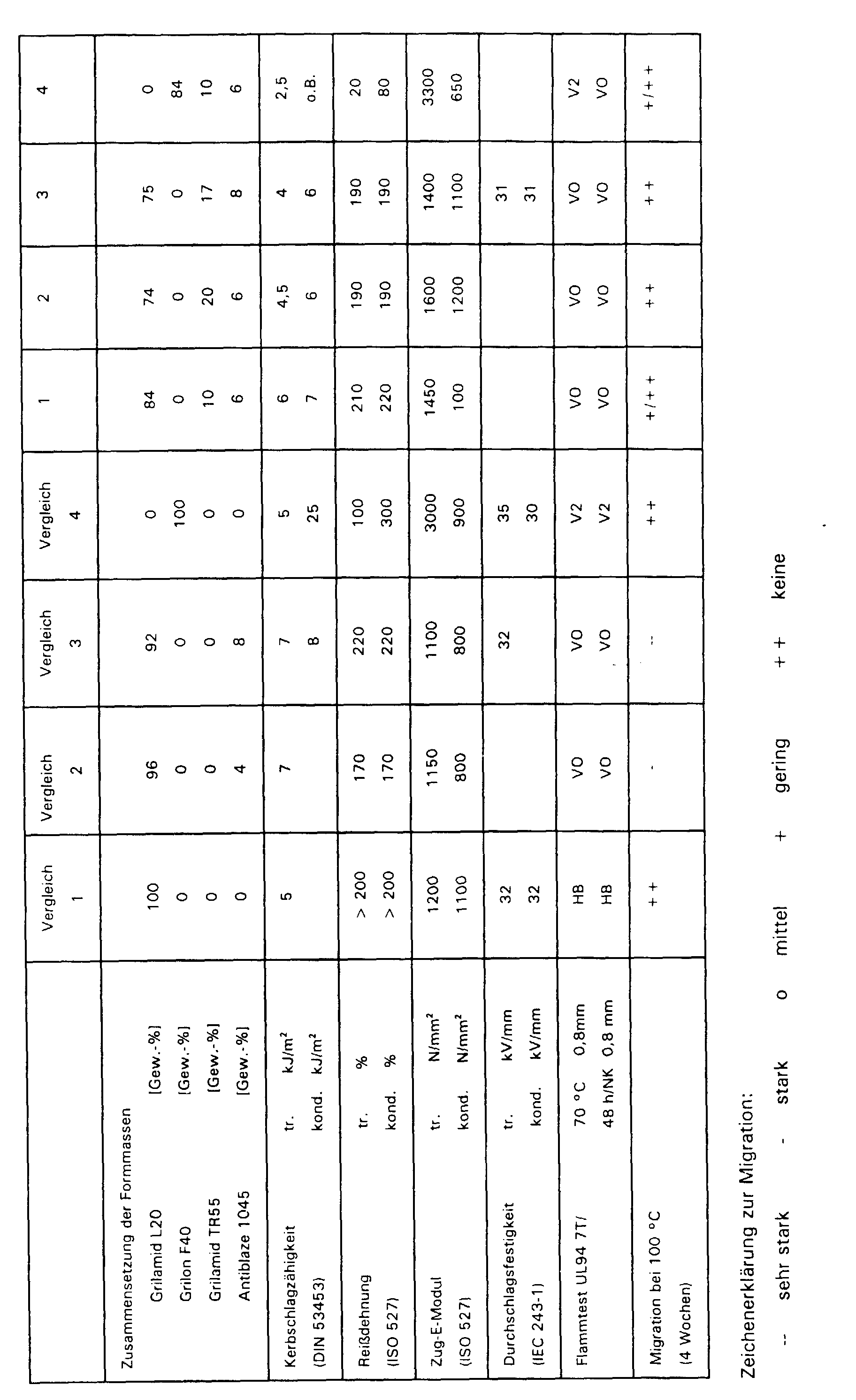

## Patentansprüche

1. Schwerentflammbares, teilkristallines, belagsfreies und migrationsfreies Polyamid aus einem Blend aus
(a) 40 bis 98 Gew.-% eines semikristallinen Polyamids, wobei die Monomeren des semikristallinen Polyamids ausgewählt sind aus der Gruppe der aliphatischen Diamine mit 4 bis 12 C-Atomen, der cycloaliphatischen Diamine mit 7 bis 22 C-Atomen und aromatischen Diaminen mit 6 bis 22 C-Atomen, in Kombination mit Monomeren der Gruppe aliphatische Dicarbonsäuren mit 4 bis 12 C-Atomen, cycloaliphatischen Dicarbonsäuren mit 8 bis 24 C-Atomen und aromatischen Dicarbonsäuren mit 8 bis 20 C-Atomen;
(b) 2 bis 60 Gew.-% eines amorphen Polyamids oder Copolyamids, wobei die Monomeren des amorphen Polyamids oder Copolyamids ausgewählt sind aus der Gruppe Hexamethylendiamin und seine Alkyl-Derivate wie 1,6-Diamino-2,2',4-trimethylhexan, 1,6-Diamino-2,4,4'-trimethylhexan, seine halogenierten Derivate, Bis-(p-aminocyclohexyl)methan und seine Derivate und Homologe wie 3,3'-Dimethyl-4,4'-diamino-dicyclohexylmethan, 4,4'-Diaminodicyclohexyl-2,2'-propan (PACP), 3-Aminomethyl-3,5,5-trimethylcyclohexylamin (Isophorondiamin), in Kombination mit aliphatischen Dicarbonsäuren mit 4 bis 36 C-Atomen und aromatischen Dicarbonsäuren mit 8 bis 20 C-Atomen,
wobei das Polyamid zum Erreichen der VO-Qualifikation gemäß UL-94 als flammhemmendes Additiv mindestens eine Alkylphosphonsäureverbindung der allgemeinen Formel I: 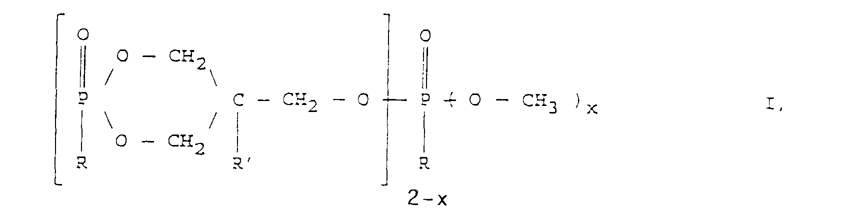 in Anteilen von 4 bis 15 Gew.-% enthält,
worin R und R' unabhängig voneinander ein C₁ bis C₄-Alkylrest ist und X = oder 1.

2. Polyamid gemäß Anspruch 1, dadurch gekennzeichnet, daß die mindestens eine Alkylphosphonsäureverbindung der allgemeinen Formel I in einer Reinheitskonzentration von 60 bis 100% vorliegt und der Rest aus anderen phosphorhaltigen Verbindungen besteht.

3. Polyamid nach Anspruch 1, dadurch gekennzeichnet, daß in Formel I R' ein C₂H₅-Rest ist.

4. Polyamid nach Anspruch 1, 2 oder 3, dadurch gekennzeichnet, daß in Formel I R ein CH₃-Rest ist.

5. Polyamid gemäß Anspruch 1, dadurch gekennzeichnet, daß das semikristalline Polyamid ein Copolyamid auf Basis des PA 6, PA 11 oder PA 12, PA 46, PA 66, PA 69, PA 610, PA 612, PA 1212 ist.

6. Polyamid gemäß Anspruch 1, dadurch gekennzeichnet, daß das amorphe Polyamid ausgewählt ist aus der Gruppe PA 12 MACMI, PA 12 MACMT, PA 12 MACMI MACMT, PA 61, PA 61 6T. PA 12 MACM36, PANDI INDI PA NDT INDT und PA 61 6T MACMI.

7. Polyamid gemäß einem der vorhergehenden Ansprüche, dadurch gekennzeichnet, daß das flammhemmende Additiv ein Ester aus einem aliphatischen Polyol und einer alkylierten Phosphonsäure ist.

8. Polyamid gemäß einem der vorhergehenden Ansprüche, dadurch gekennzeichnet, daß das flammhemmende Additiv ein Trimethylpropanolester einer Methylphosphonsäure ist.

9. Polyamid gemäß einem der vorhergehenden Ansprüche, dadurch gekennzeichnet, daß es als flammhemmendes Additiv Methyl-phosphonsäure-bis-[(5-ethyl-2-methyl-1,3,2-dioxaphosphorinan-5-yl)-methyl]ester-P,P'-dioxid, dessen Monomeres und Gemische davon enthält.

10. Schwerentflammbare Formmassen bzw. Formkörper, herstellbar aus den Polyamid-Blends gemäß einem der Ansprüche 1 bis 9.

11. Schwerentflammbare Formmassen bzw. Formkörper, herstellbar aus einem Blend aus Polyamiden gemäß einem der Ansprüche 1 bis 9 und weiteren Polymeren aus der Gruppe PET, PBT, PC, PVC, PVA, PU, PE, PP, PPS, wobei die Blends modifiziert sein können mit Additiven aus der Gruppe der Schlagzähmodifikatoren, Weichmacher, Stabilisatoren, Verstärkungsmittel, Pigmente, Farbstoffe und Füllstoffe.

12. Verwendung des Polyamid-Blends gemäß den Ansprüchen 1 bis 9, zur Herstellung von schwerentflammbaren Fäden, Kabeln, Steckern und Platten.

## Claims

1. Flame-retardant, partially crystalline polyamide free from surface deposits and from migration and made from a blend of
(a) from 40 to 98% by weight of a semicrystalline polyamide, where the monomers of the semicrystalline polyamide have been selected from the class consisting of the aliphatic diamines having from 4 to 12 carbon atoms, the cycloaliphatic diamines having from 7 to 22 carbon atoms and aromatic diamines having from 6 to 22 carbon atoms, in combination with monomers selected from the class consisting of aliphatic dicarboxylic acids having from 4 to 12 carbon atoms, cycloaliphatic dicarboxylic acids having from 8 to 24 carbon atoms and aromatic dicarboxylic acids having from 8 to 20 carbon atoms;
(b) from 2 to 60% by weight of an amorphous polyamide or copolyamide, where the monomers of the amorphous polyamide or copolyamide have been selected from the class consisting of hexamethylenediamine and its alkyl derivatives, such as 1,6-diamino-2,2',4-trimethylhexane and 1,6-diamino-2,4,4'-trimethylhexane, its halogenated derivatives, bis(p-aminocyclohexyl)methane and its derivatives and homologues, such as 3,3'-dimethyl-4,4'-diaminodicyclohexylmethane, 4,4'-diaminodicyclohexyl-2,2'-propane (PACP), 3-aminomethyl-3,5,5-trimethylcyclohexylamine (isophoronediamine), in combination with aliphatic dicarboxylic acids having from 4 to 36 carbon atoms and with aromatic dicarboxylic acids having from 8 to 20 carbon atoms,
where the polyamide comprises, as flame-retardant additive for achieving the VO qualification in accordance with UL 94, a proportion of from 4 to 15% by weight of at least one alkylphosphonic acid compound of the general formula I: 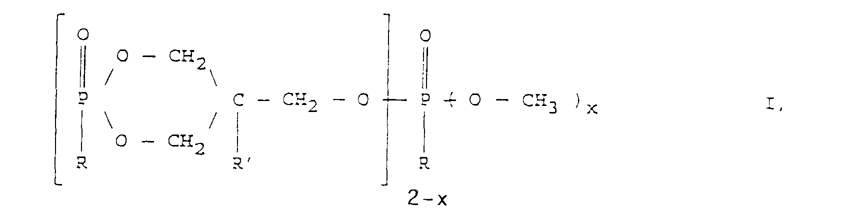 where R and R', independently of one another, is [sic] a C₁-C₄-alkyl and X = 0 or 1.

2. Polyamide according to Claim 1, characterized in that the purity concentration of the at least one alkylphosphonic acid compound present of the general formula I is from 60 to 100% and the remainder is composed of other phosphorus-containing compounds.

3. Polyamide according to Claim 1, characterized in that R' in formula I is a C₂H₅ radical.

4. Polyamide according to Claim 1, 2 or 3, characterized in that R in formula I is a CH₃ radical.

5. Polyamide according to Claim 1, characterized in that the semicrystalline polyamide is a polyamide based on PA 6, PA 11 or PA 12, PA 46, PA 66, PA 69, PA 610, PA 612, PA 1212.

6. Polyamide according to Claim 1, characterized in that the amorphous polyamide has been selected from the class consisting of PA 12 MACMI, PA 12 MACMT, PA 12 MACMI MACMT, PA 61, PA 61 6T. PA 12 MACM36, PANDI INDI PA NDT INDT and PA 61 6T MACMI.

7. Polyamide according to one of the preceding claims, characterized in that the flame-retardant additive is an ester made from an aliphatic polyol and an alkylated phosphonic acid.

8. Polyamide according to one of the preceding claims, characterized in that the flame-retardant additive is a trimethylpropanol [sic] ester of a methylphosphonic acid.

9. Polyamide according to one of the preceding claims, characterized in that the flame-retardant additive which is present is bis[(5-ethyl-2-methyl-1,3,2-dioxaphosphorinan-5-yl)methyl] methylphosphonate P,P'-dioxide [sic] and its monomer and mixtures of these.

10. Flame-retardant moulding compositions and mouldings which can be produced from the polyamide blends according to one of Claims 1 to 9.

11. Flame-retardant moulding compositions and mouldings which can be produced from a blend of polyamides according to one of Claims 1 to 9 and from other polymers selected from the class consisting of PET, PBT, PC, PVC, PVA, PU, PE, PP, PPS, where the blends may have been modified with additives selected from the class consisting of the impact modifiers, plasticizers, stabilizers, reinforcing agents, pigments, dyes and fillers.

12. The use of the polyamide blend according to Claims 1 to 9 for producing flame-retardant threads, cables, plugs and sheets.

## Revendications

1. Polyamide difficilement inflammable partiellement cristallin, dépourvu de revêtement et exempt de migration, en un blend constitué de
(a) 40 à 98 % en poids d'un polyamide semicristallin, les monomères du polyamide semicristallin étant choisis dans le groupe des diamines aliphatiques ayant 4 à 12 atomes de carbone, des diamines cycloaliphatiques ayant 7 à 22 atomes de carbone et de diamines aromatiques ayant 6 à 22 atomes de carbone, en association avec des monomères du groupe d'acides dicarboxyliques aliphatiques ayant 4 à 12 atomes de carbone, d'acides dicarboxyliques cycloaliphatiques ayant 8 à 24 atomes de carbone et d'acides dicarboxyliques aromatiques ayant 8 à 20 atomes de carbone ;
(b) 2 à 60 % en poids d'un polyamide ou copolyamide amorphe, les monomères du polyamide ou du copolyamide amorphe étant choisis dans le groupe comprenant l'hexaméthylènediamine et ses dérivés d'alkyle tels que le 1,6-diamino-2,2',4-triméthylhexane, le 1,6-diamino-2,4,4'-triméthylhexane, ses dérivés halogénés, le bis-(p-aminocyclohexyl)méthane et ses dérivés et homologues tels que le 3,3'-diméthyl-4,4'-diamino-dicyclohexylméthane, le 4,4'-diaminodicyclohexyl-2,2'-propane (PACP), la 3-aminométhyl-3,5,5-triméthylcyclohexylamine (isophoronediamine), en association avec des acides dicarboxyliques aliphatiques ayant 4 à 36 atomes de carbone et des acides dicarboxyliques aromatiques ayant 8 à 20 atomes de carbone,
le polyamide contenant comme additif retardateur de flamme pour obtenir la qualification VO selon UL-94, en proportions de 4 à 15 % en poids, au moins un composé d'acide alkylphosphonique de formule générale I : 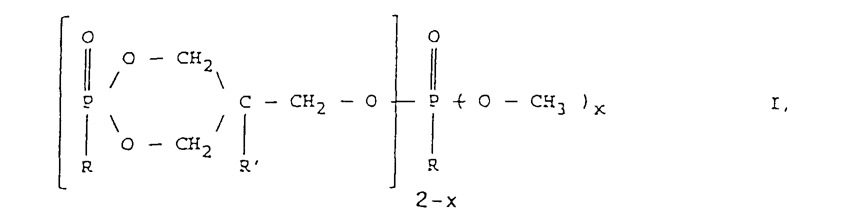 dans laquelle R et R' sont indépendamment l'un de l'autre un reste alkyle en C₁ à C₄ et x a la valeur 0 ou 1.

2. Polyamide suivant la revendication 1, caractérisé en ce que l'au moins un composé d'acide alkylphosphonique de formule générale I est présent à un degré de pureté de 60 à 100 % et le reste est constitué d'autres composés contenant du phosphore.

3. Polyamide suivant la revendication 1, caractérisé en ce que dans la formule I, R' est un reste C₂H₅.

4. Polyamide suivant la revendication 1, 2 ou 3, caractérisé en ce que dans la formule I, R est un reste CH₃.

5. Polyamide suivant la revendication 1, caractérisé en ce que le polyamide semicristallin est un polyamide à base de PA 6, PA 11 ou PA 12, PA 46, PA 66, PA 69, PA 610, PA 612, PA 1212.

6. Polyamide suivant la revendication 1, caractérisé en ce que le polyamide amorphe est choisi dans le groupe consistant en PA 12 MACMI, PA 12 MACMT, PA 12 MACMI MACMT, PA 61, PA 61 6T, PA 12 MACM36, PANDI INDI PA NDT INDT et PA 61 6T MACMI.

7. Polyamide suivant l'une des revendications précédentes, caractérisé en ce que l'additif retardateur de flamme est un ester d'un polyol aliphatique et d'un acide phosphonique alkylé.

8. Polyamide suivant l'une des revendications précédentes, caractérisé en ce que l'additif retardateur de flamme est un ester de triméthylpropanol d'un acide méthylphosphonique.

9. Polyamide suivant l'une des revendications précédentes, caractérisé en ce qu'il contient comme additif retardateur de flamme du P,P'-dioxyde d'ester bis-[(5-éthyl-2-méthyl-1,3,2-dioxaphosphorinane-5-yl)-méthylique d'acide méthylphosphonique, le monomère de ce dioxyde, et des mélanges des deux.

10. Compositions à mouler et pièces moulées difficilement inflammables, pouvant être obtenues à partir des blends de polyamides suivant l'une des revendications 1 à 9.

11. Compositions à mouler et pièces moulées difficilement inflammables, pouvant être obtenues à partir d'un blend de polyamides suivant l'une des revendications 1 à 9 et d'autres polymères du groupe PET, PBT, PC, PVC, PVA, PU, PE, PP, PPS, les blends pouvant être modifiés avec des additifs du groupe des modificateurs de résistance au choc, des plastifiants, des agents stabilisants, des agents de renforcement, des pigments, des colorants et des charges.

12. Utilisation du blend de polyamides suivant les revendications 1 à 9 pour la production de fils, câbles, fiches et plaques difficilement inflammables.
